# FASCICULE DE BREVET EUROPEEN

(11) **EP 2 124 410 B1**
(45) Date de publication et mention de la délivrance du brevet: **04.05.2016**
(21) Numéro de dépôt: 09290376.4
(22) Date de dépôt: 20.05.2009
(51) Int. Cl.: H04L 29/06

(54) **SYSTÈME, PROCÉDÉ, SERVEUR D'APPLICATION ET HSS POUR L'AUTOPROVISIONNEMENT D'AU MOINS UN SERVICE DANS AU MOINS UN SERVEUR D'APPLICATION D'UNE ARCHITECTURE IMS**
SYSTEM, VERFAHREN, ANWENDUNGSSERVER UND HSS (HOME SUBSCRIBER SERVER) FÜR DIE SELBSTVERSORGUNG MIT MINDESTENS EINEM DIENST IN MINDESTENS EINEM ANWENDUNGSSERVER EINER IMS-ARCHITEKTUR
SYSTEM, METHOD, APPLICATION SERVER AND HSS FOR SELF-PROVISIONING OF AT LEAST ONE SERVICE IN AT LEAST ONE APPLICATION SERVER OF AN IMS ARCHITECTURE

(30) Priorité: 20.05.2008 FR 0802701
(43) Date de publication de la demande: 25.11.2009
(73) Titulaire: Société Française du Radiotéléphone, 75008 Paris (FR)
(72) Inventeur: Carton, François, 77590 Chartrettes (FR)
(74) Mandataire: Debay, Yves

(56) Documents cités:
- WO-A-2008/047074
- GB-A- 2 425 685
- 3RD GENERATION PARTNERSHIP PROJECT: "Technical Specification Group Services and System Aspects; IP Multimedia Subsystem (IMS); Stage 2 (Release 8)" INTERNET CITATION, septembre 2007 (2007-09), pages 52-63, XP002500172

## Description

La présente invention concerne le domaine des communications dans les systèmes à architecture de type IMS (« IP Multimedia Subsystem », selon la terminologie anglo-saxonne). L'invention concerne plus particulièrement l'autoprovisionnement (« autoprovisioning », selon la terminologie anglo-saxonne) d'un service dans un serveur d'application au sein d'une architecture de type IMS, c'est-à-dire la fourniture et la mise à jour de données utilisateurs (provisionnement) permettant l'accès des utilisateurs aux divers services supportés par le serveur d'application dans le système de type IMS. En effet, dans les systèmes à architecture de type IMS, c'est-à-dire dans un réseau de type IMS (ou ses équivalents éventuels), divers services peuvent être fournis aux utilisateurs, tels que des communications ou l'accès à des contenus multimédia. Pour cela, les utilisateurs sont authentifiés d'après des données utilisateurs enregistrées auprès des fournisseurs de services. L'IMS est une architecture standardisée de « Réseau de Nouvelle Génération » (NGN, pour « Next Generation Network », selon la terminologie anglo-saxonne) qui permet de fournir des services de téléphonie et multimédias fixes et mobiles. L'IMS utilise une implémentation du protocole SIP (« Session Initiation Protocol » selon la terminologie anglo-saxonne, qui est un protocole standard ouvert de télécommunications multimédia destiné à de nombreuses applications telles que la téléphonie sous IP, la visiophonie, la messagerie instantanée, la réalité virtuelle ou même les jeux vidéo) standardisée par le 3GPP (« 3rd Generation Partnership Project » selon la terminologie anglo-saxonne, qui est un projet de coopération mondiale entre organismes de standardisation régionaux en télécommunications et visant à produire des spécifications techniques pour les réseaux mobiles de 3^{e} génération). L'IMS fonctionne sur un protocole standard IP (« Internet Protocol » selon la terminologie anglo-saxonne) défini par l'IETF (« Internet Engineering Task Force », selon la terminologie anglo-saxonne) et permet ainsi de faire converger l'Internet et le monde de la téléphonie mobile en permettant aux utilisateurs d'accéder à divers types de services (sous IP) quelque soit le type de terminal qu'ils utilisent.

Dans une architecture IMS, un serveur d'application destiné à fournir au moins un service aux utilisateurs peut comporter une base de données utilisateur pour identifier les utilisateurs accédant au(x) service(s) et enregistrer des préférences des utilisateurs ou tout type d'informations utiles pour le service. L'accès au service (du serveur d'application) est réalisé par l'intermédiaire d'un serveur relais ou proxy (« Proxy Call Session Control Function » selon la terminologie anglo-saxonne) qui identifie le terminal utilisateur accédant au coeur du réseau de communication (par l'identifiant du terminal, appelé IMPI, pour « IP Multimedia Private Identity » selon la terminologie anglo-saxonne). Une des fonctions de ce proxy est de transférer les messages SIP du terminal de l'utilisateur vers l'élément IMS adéquat pour fournir le service, selon le type de message ou la procédure à effectuer (le I-CSCF, pour « Interrogating Call Session Control Function » ou le S-CSCF, pour « Serving Call Session Control Function » selon la terminologie anglo-saxonne). L'accès au service (du serveur d'application) est autorisé, au sein du réseau de communication que le terminal de l'utilisateur emprunte, par l'intermédiaire d'un serveur d'authentification (HSS, pour « Home Subscriber Server » selon la terminologie anglo-saxonne) comportant une base de données interne ou externe (« Common profile Store », selon la terminologie anglo-saxonne) d'authentification des utilisateurs identifiés par des identifiants publics (IMPU, pour « IP Multimedia Public Identity » selon la terminologie anglo-saxonne). La base de données du HSS stocke également les autorisations d'accès recueillies par un système d'information pour les différents services. Ce système d'information permet de recueillir les informations relatives aux services souscrits par l'utilisateur et de provisionner son compte auprès des gestionnaires du réseau de communication en enregistrant ses souscriptions dans le HSS (on parle alors de provisionnement ou de « provisioning » selon la terminologie anglo-saxonne). Même lorsqu'un serveur d'application stocke une base de données utilisateurs, le provisionnement peut ainsi se faire par l'intermédiaire du réseau de communication (et donc du HSS) au lieu de nécessiter l'implémentation d'une interface entre le système d'information et le serveur d'application (on parle alors d'autoprovisionnement ou « autoprovisioning » selon la terminologie anglo-saxonne). Le serveur d'application et le HSS dialoguent entre eux par l'intermédiaire d'une interface, dite interface Sh, en utilisant un protocole normalisé (protocole « Diameter ») et les données du serveur d'application peuvent être mises à jour automatiquement depuis le HSS lorsqu'un abonnement de notifications est établi entre le HSS et le serveur d'application. Ainsi, les données stockées par le serveur d'application sont mises à jour automatiquement à partir des données de l'utilisateur stockées par le HSS. Cependant, cette architecture IMS fait naître un problème nouveau qui concerne la modification de l'identifiant de l'utilisateur (IMPU). Le système d'information, qui n'appartient pas à l'architecture IMS proprement dite, permet à un utilisateur de changer son identifiant public (l'IMPU). Il est hautement avantageux que ce changement puisse être effectué en conservant toutes les données de l'utilisateur dans le HSS, or l'interface Sh entre le HSS et le serveur d'application ne permet pas de changer d'IMPU en conservant les données de l'utilisateur dans la base de données du serveur d'application.

En effet, la norme IMS ne prévoit aucun mécanisme pour permettre à un utilisateur de changer son IMPU tout en conservant les données enregistrées dans les bases de données. Ce problème nouveau concerne donc le changement d'IMPU dans une base de données d'un serveur d'application d'une architecture IMS ou, plus particulièrement, la conservation des informations stockées en relation avec un IMPU dans une base de données d'un serveur d'application d'une architecture IMS lors de la modification d'un IMPU d'un utilisateur.

GB-A-2 425 685 décrit un système permettant à un utilisateur de modifier d'IMPU en conservant l'ensemble des informations qu'il a enregistrées dans les serveurs d'applications.

Dans ce contexte, il est intéressant de proposer une solution à ce problème, pour permettre à un utilisateur de changer d'IMPU tout en conservant l'ensemble des informations qu'il a enregistrées dans les serveurs d'applications, de façon à permettre un autoprovisionnement complet, même lors d'un changement d'IMPU par un utilisateur.

La présente invention a pour but de supprimer au moins un des inconvénients de l'art antérieur en proposant un système d'autoprovisionnement d'au moins un service dans au moins un serveur d'application d'au moins une architecture IMS permettant, sans nécessiter d'interface spécifique de provisionnement, de provisionner les données d'au moins une base de données du serveur d'application par modification d'au moins un identifiant public d'au moins un utilisateur, tout en conservant les données de l'utilisateur stockées dans la base de données du serveur d'application de l'architecture IMS.

Ce but est atteint par un système d'autoprovisionnement d'au moins un service dans au moins un serveur d'application d'au moins une architecture IMS, l'architecture IMS comprenant au moins un serveur d'authentification d'utilisateurs, dit HSS, selon la revendication 1.

Selon une autre particularité, les moyens de traitement du HSS sont agencés pour inclure les données de modification au niveau d'au moins un champ standard laissé libre dans la notification selon le protocole standard, et pour envoyer cette notification au serveur d'application, puis pour envoyer au serveur d'application une notification de suppression des données relatives au premier identifiant public, les moyens de traitement du serveur d'application étant agencés pour recevoir cette notification selon le protocole standard, pour enregistrer temporairement les données de modification incluses dans cette notification en attendant la suppression du premier identifiant et pour enregistrer le second identifiant public avec les données qui étaient indexées selon le premier identifiant public, en supprimant le premier identifiant public, lors de la réception de la notification de suppression des données relatives au premier identifiant public.

Selon une autre particularité, les moyens de traitement du HSS sont agencés pour générer une notification spécifique de modification d'un premier identifiant public, vers un second identifiant public, et incorporer dans cette notification spécifique les données représentatives de la modification et envoyer cette notification spécifique au serveur d'application, les moyens de traitement du serveur d'application étant agencés pour enregistrer le second identifiant public avec les données qui étaient indexées selon le premier identifiant public, lors de la réception de cette notification spécifique.

Selon une autre particularité, les moyens de traitement du HSS, agencés pour recevoir et traiter la demande de changement d'un premier identifiant public vers un second identifiant public, sont agencés pour traiter cette demande notamment en enregistrant le second identifiant public avec les données qui étaient indexées selon le premier identifiant public, dans la base de données stockant au moins des données relatives à l'autorisation de l'accès d'utilisateurs à divers services supportés par l'architecture IMS.

Selon une autre particularité, les moyens de traitement du HSS sont agencés pour recevoir et traiter la demande de changement d'un premier identifiant public vers un second identifiant public en provenance d'au moins un système d'information recueillant les données relatives aux utilisateurs de l'architecture IMS et à leurs souscriptions de services.

Selon la présente invention, les moyens de traitement du HSS et du serveur d'application sont agencés pour établir un abonnement de notifications pour la mise à jour automatique des données de la base de données du serveur d'application lors de changements des données de la base de données du HSS, les moyens de traitement du serveur d'application étant agencés pour requérir, auprès du HSS, un nouvel abonnement de notification pour le second identifiant public suite à l'enregistrement de la modification lorsque le HSS ne conserve pas l'abonnement dans la base de données stockant au moins des données relatives à l'autorisation de l'accès d'utilisateurs à divers services supportés par l'architecture IMS, suite à la modification, et les moyens de traitement du HSS étant agencés pour créer ce nouvel abonnement lors de la réception de cette requête, ou pour modifier l'identifiant public correspondant à l'abonnement dans les données de la base de données stockant au moins des données relatives à l'autorisation de l'accès d'utilisateurs, lorsque le HSS conserve l'abonnement suite à la modification.

Un autre but de la présente invention est de supprimer au moins un des inconvénients de l'art antérieur en proposant un procédé d'autoprovisionnement d'au moins un service dans au moins un serveur d'application d'au moins une architecture IMS permettant, sans nécessiter d'interface spécifique de provisionnement, de provisionner les données d'au moins une base de données du serveur d'application par modification d'au moins un identifiant public d'au moins un utilisateur, tout en conservant les données de l'utilisateur stockées dans la base de données du serveur d'application de l'architecture IMS.

Ce but est atteint par un procédé d'autoprovisionnement d'au moins un service dans au moins un serveur d'application d'au moins une architecture IMS, l'architecture IMS comprenant au moins un serveur d'authentification d'utilisateurs, dit HSS, selon la revendication 6.

Selon une autre particularité, l'étape d'inclusion des données représentatives de la modification de l'identifiant public dans la notification comporte les étapes suivantes :
- insertion, par les moyens de traitement du HSS, de ces données au niveau d'au moins un champ standard laissé libre dans la notification selon le protocole standard, et envoi de cette notification,
- réception de la notification selon le protocole standard et enregistrement temporaire, par les moyens de traitement du serveur d'application, des données de modification incluses dans la notification, en attendant la suppression du premier identifiant
- création et envoi, par les moyens de traitement du HSS, d'une notification de suppression des données relatives au premier identifiant public vers le serveur d'application,
- réception, par les moyens de traitement du serveur d'application, de la notification de suppression des données relatives au premier identifiant public, permettant alors la mise en oeuvre de l'étape d'enregistrement du second identifiant public et une étape de suppression du premier identifiant public

Selon une autre particularité, l'étape d'inclusion des données représentatives de la modification de l'identifiant public dans la notification comporte les étapes suivantes :
- création, par les moyens de traitement du HSS, d'une notification spécifique de modification d'un premier identifiant public, vers un second identifiant public,
- incorporation, dans cette notification spécifique, des données représentatives de la modification, et envoi de la notification spécifique,
- réception de cette notification spécifique par les moyens de traitement du serveur d'application, permettant alors la mise en oeuvre de l'étape d'enregistrement du second identifiant public.

Selon une autre particularité, l'étape de traitement de la demande de changement d'un premier identifiant public vers un second identifiant public, par les moyens de traitement du HSS, suite à la réception de cette demande comporte une étape d'enregistrement du second identifiant public avec les données qui étaient indexées selon le premier identifiant public, dans la base de données stockant au moins des données relatives à l'autorisation de l'accès d'utilisateurs à divers services supportés par l'architecture IMS.

Selon une autre particularité, l'étape de réception de la demande de modification par les moyens de traitement du HSS est précédée d'une étape d'envoi de la demande de changement d'un premier identifiant public vers un second identifiant public par au moins un système d'information recueillant les données relatives aux utilisateurs de l'architecture IMS et à leurs souscriptions de services.

selon la présente invention, des étapes d'échanges entre les moyens de traitement du HSS et du serveur d'application permettent d'établir un abonnement de notifications pour la mise à jour automatique des données de la base de données du serveur d'application lors de changements des données de la base de données du HSS, le procédé comportant, suite à la modification de l'identifiant public, au moins une des étapes suivantes :
- requête, par les moyens de traitement du serveur d'application, auprès du HSS, d'un nouvel abonnement de notification pour le second identifiant public suite à l'enregistrement de la modification lorsque le HSS ne conserve pas l'abonnement dans la base de données stockant au moins des données relatives à l'autorisation de l'accès d'utilisateurs à divers services supportés par l'architecture IMS, et création de ce nouvel abonnement par les moyens de traitement du HSS ou
- modification, par les moyens de traitement du HSS, de l'identifiant public correspondant à l'abonnement dans les données de la base de données stockant au moins des données relatives à l'autorisation de l'accès d'utilisateurs ou création d'un nouvel abonnement pour le second identifiant public, à partir de l'abonnement du premier identifiant public, lorsque le HSS conserve l'abonnement dans la base de données stockant au moins des données relatives à l'autorisation de l'accès d'utilisateurs à divers services supportés par l'architecture IMS.

Un autre but de la présente invention est de supprimer au moins un des inconvénients de l'art antérieur en proposant un HSS pour l'autoprovisionnement d'au moins un service dans au moins un serveur d'application d'au moins une architecture IMS permettant, sans nécessiter d'interface spécifique de provisionnement, de provisionner les données d'au moins une base de données du serveur d'application par modification d'au moins un identifiant public d'au moins un utilisateur, tout en conservant les données de l'utilisateur stockées dans la base de données du serveur d'application de l'architecture IMS.

Ce but est atteint par un serveur d'authentification d'utilisateurs, dit HSS, pour l'autoprovisionnement d'au moins un service dans au moins un serveur d'application d'au moins une architecture IMS, selon la revendication 11.

Un autre but de la présente invention est de supprimer au moins un des inconvénients de l'art antérieur en proposant un serveur d'application pour l'autoprovisionnement d'au moins un service dans un serveur d'application d'au moins une architecture IMS permettant, sans nécessiter d'interface spécifique de provisionnement, de provisionner les données d'au moins une base de données du serveur d'application par modification d'au moins un identifiant public d'au moins un utilisateur, tout en conservant les données de l'utilisateur stockées dans la base de données du serveur d'application de l'architecture IMS.

Ce but est atteint par un serveur d'application pour l'autoprovisionnement d'au moins un service dans au moins un serveur d'application d'au moins une architecture IMS, selon la revendication 12.

D'autres particularités et avantages de la présente invention apparaîtront plus clairement à la lecture de la description ci-après, faite en référence aux dessins annexés, dans lesquels :
- la figure 1 représente un système d'autoprovisionnement selon un mode de réalisation de l'invention,
- la figure 2 représente un procédé d'autoprovisionnement selon un mode de réalisation de l'invention.

La présente invention concerne un système et un procédé d'autoprovisionnement d'au moins un service dans au moins un serveur d'application d'au moins une architecture IMS. L'architecture IMS comprend, de façon connue en soi, au moins un serveur (1) d'authentification d'utilisateurs, dit HSS, et au moins un serveur (2) d'application et les communications et/ou la fourniture des services se font via au moins un réseau (RC) de communication. De façon connue en soi, ce réseau (RC) de communication peut comporter en fait plusieurs réseaux de types différents, tels que par exemple, un réseau de téléphonie mobile, un réseau de type Internet, un réseau de téléphonie fixe, etc.. Le HSS (1) comporte des moyens (10) de traitement accédant à au moins une base de données (11) stockant au moins des données relatives à l'autorisation de l'accès d'utilisateurs à divers services supportés par l'architecture IMS. Le serveur (2) d'application comporte des moyens (20) de traitement agencés pour fournir au moins un service aux utilisateurs et pour accéder à au moins une base de données (21) stockant au moins des données relatives aux utilisateurs autorisés à accéder audit service, indexées selon au moins un identifiant public des utilisateurs. Les utilisateurs peuvent utiliser en fait plusieurs identifiants publics. De plus, on notera ici que l'invention peut également être appliquée pour d'autres types d'identifiants des utilisateurs (ou de leur terminal) ou de groupes d'utilisateurs. Ainsi, par exemple, l'invention est également généralisable aux "IMS Public Identity Group" et "IMS Public Service Identity", connus dans le standard IMS. Le HSS (« Home Subscriber Server », selon la terminologie anglo-saxonne) appartient au coeur du réseau de communication supportant les divers services proposés au sein de l'architecture et permet de centraliser les données relatives aux utilisateurs et aux services auxquels ces derniers souscrivent. Le serveur d'application (ou « Application Server » selon la terminologie anglo-saxonne) est, de façon connue en soi, au moins un serveur destiné à délivrer au moins un service, par exemple de type téléphonie ou multimédia. Le HSS (1) et le serveur (2) d'application communiquent entre autres via des notifications (« Sh notification » selon la terminologie anglaise) normalisées selon un protocole standard (le protocole « Diameter » de l'interface Sh). Il doit être évident que le terme de serveur utilisé ici doit être interprété comme désignant au moins un serveur et qu'il importe peu qu'il s'agisse d'un seul serveur ou de plusieurs serveurs distribués au sein de l'architecture, l'essentiel étant que les fonctions décrites ici soient supportées par au moins un des équipements des réseaux de communication dans lesquels sont implémentées les fonctionnalités de l'architecture IMS. De même, le terme « serveur » peut s'entendre comme désignant tout dispositif muni de ressources de calcul pour le traitement de données (qu'il s'agisse par exemple d'un serveur ou simplement d'un ordinateur ou d'un équipement plus complexe). De plus, le terme « moyens de traitement » est utilisé ici pour désigner tout type d'agencement permettant de traiter des données numériques (ou même analogiques) et ce terme ne doit pas être interprété de façon limitative car il peut désigner au moins un microprocesseur ou au moins un circuit électronique utilisé pour supporter les fonctions décrites ici ou même une combinaison d'au moins un microprocesseur et d'au moins un circuit électronique. En particulier, lorsque l'on réfère ici à des moyens de traitement agencés pour réaliser une fonction décrite, il doit être évident pour l'homme de métier que l'agencement des moyens de traitement peut consister par exemple en l'exécution d'une application logicielle sur au moins un microprocesseur et/ou en au moins un circuit électronique spécifique. De plus, il doit également être évident que les dispositifs (serveurs en particulier), les moyens de traitement, les modules ou les agencements décrits ici peuvent en fait être distribués sur plusieurs dispositifs équipés de ressources de calcul pour le traitement de données et qu'il ne doit pas être considéré que les termes utilisés ici ne désignent forcément qu'un seul dispositif, moyen, module ou agencement. Les différents modules décrits ici sont définis de manière fonctionnelle selon le type d'opération qu'ils réalisent et il doit être évident que ces modules peuvent en fait être combinés ensemble dans un seul module implémenté dans les moyens de traitement d'un ou plusieurs serveurs ou distribués en modules différents sur plusieurs moyens de traitement d'un ou plusieurs serveurs et que l'invention permet diverses combinaison des moyens modules et agencement décrits ici. Les définitions fonctionnelles données ici ne doivent donc pas être limitées aux modules, moyens de traitement ou agencement puisqu'il sera évident pour l'homme de métier que ces fonctionnalités peuvent être implémentées de diverses manières sans s'éloigner de l'esprit de l'invention. De même, lorsque l'on réfère ici au HSS (1) ou au serveur (2) d'application, il apparaîtra à l'homme de métier qu'un HSS peut être agencé comme décrit ici pour provisionner plusieurs serveurs d'application ou même qu'un HSS peut être agencé comme décrit ici pour provisionner un autre HSS et/ou un autre serveur d'application ou qu'un serveur d'application peut être agencé comme décrit ici pour permettre le provisionnement d'un autre serveur d'application qui ne serait pas agencé comme décrit ici. Ainsi, les fonctionnalités décrites ici peuvent être distribuées sur divers dispositifs (des HSS, des serveurs d'application ou même tout type de terminal) et être supportées grâce à des communications entre les dispositifs adéquats via au moins un réseau (RC) de communication. Enfin, il est évident que les bases de données décrites ici et auxquelles accèdent les serveurs, pour la mise en oeuvre des services en général et de l'invention en particulier, peuvent être dans le serveur lui-même ou à distance, c'est-à-dire accessibles via au moins un réseau (RC) de communication et que ces bases de données peuvent être distribuées sur un seul ou plusieurs dispositifs de stockage de données. De plus, le terme « enregistrement » utilisé ici pour le stockage des données au niveau des serveurs désigne en général une sauvegarde de données dans les bases de données accessibles aux serveurs, et non pas l'attachement au réseau (connu sous le nom de « register » dans la terminologie anglo-saxonne appliquée à l'IMS). Ce type de rattachement au réseau ou d'étapes standard du fonctionnement de l'IMS ne seront généralement pas détaillés ici et aucun détail ne sera donné ici en ce qui concerne l'organisation de l'architecture IMS. La présente invention est en effet destinée à être mise en oeuvre au moins dans une architecture IMS définie selon la norme ou dans une architecture équivalente (avec par exemple les variantes possibles décrites précédemment en référence à l'organisation et la distribution des dispositifs, moyens, modules, agencements, bases de données, etc.), notamment avec les définitions (TS 29.328 et TS 29.329) du protocole « Diameter » régissant l'interface, dite Sh, entre le HSS et le serveur d'application. En effet, ce sont les définitions données dans cette norme qui font naître le problème que la présente invention se propose de résoudre, à savoir l'autoprovisionnement pour la modification de l'identifiant public d'un utilisateur (par exemple un souscripteur, un abonné ou un détenteur d'une carte prépayée) avec conservation des données stockées dans les bases de données du HSS et du serveur d'application, relatives à l'utilisateur, ses préférences, ses messages ou toute information utile pour l'utilisation des services proposés par le(s) serveur(s) d'application(s) au sein de l'architecture IMS. Ainsi, on comprend que le terme « provisionnement » utilisé ici est issu de la terminologie anglo-saxonne et désigne le fait de conserver dans les bases de données de divers serveurs, les informations utiles aux utilisateurs du système. Le terme « autoprovisionnement », issu également de la terminologie anglo-saxonne désigne le fait que le réseau IMS permet de provisionner automatiquement un utilisateur dans la base de données d'un serveur d'application sans interface spécifique entre le système d'information et ce serveur d'application.

Pour rappel, les étapes préalables à la mise en oeuvre de l'invention sont détaillées ci-après pour expliquer la création des comptes des utilisateurs dans les bases (11, 21) de données du HSS (1) et du serveur d'application par une méthode d'autoprovisionnement, sans interface directe entre le système d'information et le serveur d'application. Par exemple, un système (3) d'information permet de recueillir les informations relatives aux utilisateurs, aux services souscrits et tout type de données utiles. Ce système (3) d'information transmet ces informations au HSS (1) qui les stocke (au moins en partie) dans sa base de données, de façon à contrôler l'accès des différents utilisateurs aux divers services. Lorsqu'un utilisateur utilise un terminal communicant pour accéder à l'un des services auquel il a souscrit, le coeur de réseau identifie son terminal (son équipement ou « User equipement ») et sa souscription grâce à l'IMPI du terminal qui est alors authentifié et enregistré, ce qui permet à l'utilisateur de se rattacher au réseau (« Register »). Cette authentification permet d'autoriser (ou refuser, le cas échéant, selon les services souscrits) l'accès de l'utilisateur au service qu'il requiert. Au premier usage du service par un IMPU, lorsque le serveur d'application reçoit une requête d'utilisation d'un service par l'IMPU (identifiant public) de l'utilisateur, le serveur d'application sait que l'utilisateur a été identifié et autorisé par le coeur de réseau. Dans des variantes légèrement en marge de l'IMS, le serveur d'application peut également consulter le HSS pour vérifier que cet IMPU est autorisé à utiliser le service, le HSS répondant alors en fournissant, via des notifications de l'interface Sh, les autorisations enregistrées. S'il est souhaité qu'un compte persistant soit conservé pour cet utilisateur, le serveur d'application peut créer alors un compte pour l'IMPU de l'utilisateur autorisé et fournir le service requis. Le serveur d'application peut alors requérir auprès du HSS un abonnement de notification pour être mis à jour lors de tout changement des données relatives à cet IMPU. Ensuite, lorsque l'utilisateur veut modifier un des services ou supprimer son profil, le système d'information (3) envoie une demande de modification ou de suppression au HSS (1) qui l'enregistre et envoie une notification Sh au serveur d'application qui modifie ou supprime le compte associé à l'IMPU. Dans le cadre de l'invention, ces étapes préalables permettent la mise en oeuvre de l'invention qui utilise sensiblement les mêmes éléments du système mais les adapte pour permettre la modification de l'identifiant public (IMPU) d'un utilisateur tout en conservant ses données dans le HSS et le serveur d'application. Ainsi, le HSS et le serveur d'application doivent être modifiés pour mettre en oeuvre la présente invention. Le HSS doit en effet être capable de réaliser lui-même le changement d'IMPU et de générer (et transmettre) une notification à destination du serveur d'application pour lui ordonner ce changement d'IMPU, 2 méthodes étant décrites en détail ci-après pour générer et transmettre cette (ou ces) notification(s). De même, comme détaillé ci-après, une modification de l'interface Sh pourra s'avérer utile pour permettre la transmission de cet ordre de changement d'IMPU du HSS vers le serveur d'application.

Dans les bases de données (11, 21) du HSS (1) et du serveur (2) d'application, les données sont indexées selon au moins un identifiant public, dit IMPU (« IP Multimedia Public Identity » selon la terminologie anglo-saxonne), des utilisateurs. Un identifiant public (ou IMPU), peut correspondre à un numéro de téléphone mobile (MSISDN, pour « Mobile Station Integrated Services Digital Network » selon la terminologie anglo-saxonne) ou une adresse de courrier électronique (adresse mail) ou tout type d'URI (« Universal Resources Identifier » selon la terminologie anglo-saxonne). Un utilisateur peut vouloir changer d'identifiant public, par exemple lorsqu'il est harcelé sur cet identifiant ou subit de nombreux envois de publicités (« spams » sur l'adresse mail) ou simplement parce que telle est sa volonté. Les normes définissant les standards adoptés pour l'architecture IMS ne prévoient pas d'autoprovisionnement du serveur d'application pour une telle modification de l'identifiant public. Les données des utilisateurs étant stockées en relation avec cet identifiant public qui sert d'index pour les bases de données, il n'est pas permis, dans l'état actuel de la norme, de modifier l'identifiant public tout en conservant les données de l'utilisateur dans le serveur d'application, ni dans le HSS. Le protocole utilisé pour l'interface (interface Sh) entre le HSS et le serveur d'application permet de créer un nouvel ensemble de données indexées selon un nouvel identifiant public mais ne permet pas de simplement renommer cet identifiant. Ainsi, la présente invention permet de résoudre ce problème nouveau dû à l'architecture IMS et à l'interface Sh entre le HSS et le serveur d'application.

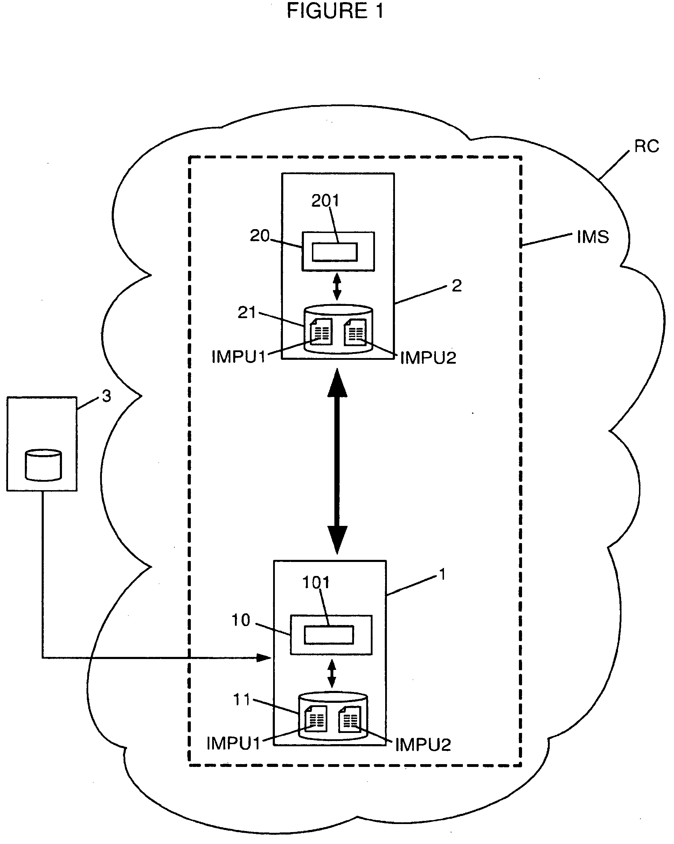

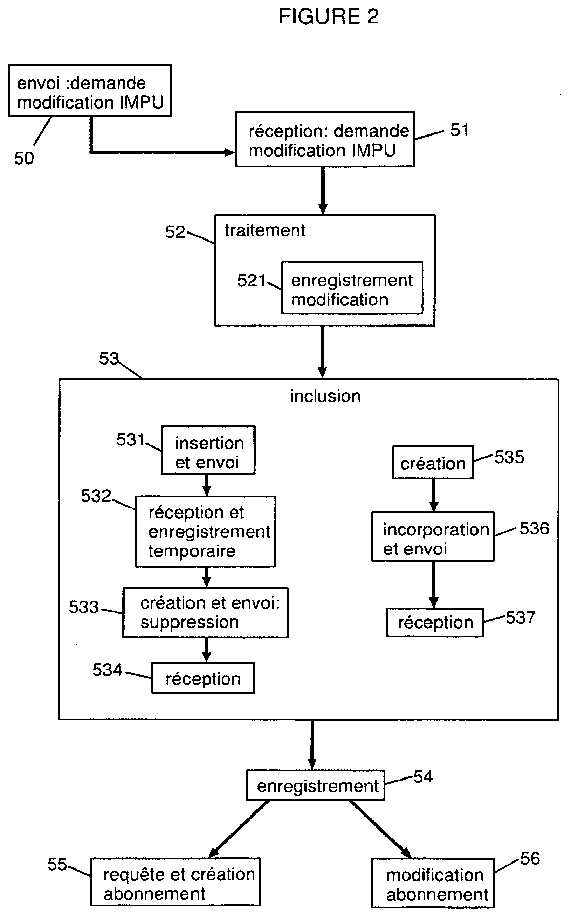

Pour cela, l'invention propose que les moyens (10) de traitement du HSS (1) soient agencés en outre pour, d'une part, recevoir et traiter une demande de changement d'un premier identifiant public (IMPU1) vers un second identifiant public (IMPU2), pour un utilisateur provisionné dans le HSS (1) et autoprovisionné dans le serveur (2) d'application (c'est-à-dire enregistré auprès d'au moins une de ces 2 entités). Par exemple, ces moyens (10) de traitement du HSS (1) pourront comporter un module (101) d'autoprovisionnement, comme représenté sur la figure 1, réalisant les fonctions décrites ici pour la modification de l'identifiant public. D'autre part, les moyens (10) de traitement du HSS (1) sont également agencés (en outre) pour inclure, dans une notification envoyée au serveur (2) d'application, des données représentatives de la modification de l'identifiant public et pour envoyer cette notification au serveur (2) d'application. Ainsi, par exemple, le module (101) d'autoprovisionnement du HSS (1) pourra comporter des moyens de réception et de traitement de la demande de modification, des moyens de création de la notification et des moyens de transmission de la notification au serveur (2) d'application. En réponse à cette notification, les moyens (20) de traitement du serveur (2) d'application sont agencés en outre pour recevoir la notification et enregistrer dans sa base (21) de données (base de données des utilisateurs du service), le second identifiant public (IMPU2) avec les données qui étaient indexées selon le premier identifiant public (IMPU1). Ainsi, par exemple, les moyens (20) de traitement du serveur (2) d'application pourront comporter un module (201) d'autoprovisionnement, comme représenté sur la figure 1, coopérant avec le module (101) d'autoprovisionnement du HSS (1). Ce module (201) d'autoprovisionnement pourra comporter des moyens de réception et de traitement des notifications reçues du HSS (1) pour réaliser les opérations requises notamment pour la modification de l'identifiant public. Le terme « module » est utilisé ici pour désigner au moins un élément intégrable au sein de l'architecture IMS et il doit être évident pour l'homme de métier qu'un tel module pourra être implémenté de diverses façons, par exemple sous la forme d'une application logicielle implémentée directement dans les applications de gestion des serveurs ou selon n'importe quel agencement. Ce terme est utilisé pour décrire des fonctionnalités de la présente invention et ne doit pas être interprété de façon limitative. Le procédé d'autoprovisionnement selon l'invention, mis en oeuvre par un système d'autoprovisionnement selon l'invention, comporte les étapes suivantes (cf. Figure 2):
- réception (51) d'une demande de changement d'un premier identifiant public (IMPU1) vers un second identifiant public (IMPU2) par le HSS (1), pour un utilisateur provisionné dans la base de données du HSS (1) et autoprovisionné dans la base de données du serveur (2) d'application (enregistré auprès du HSS (1) et du serveur (2) d'application), et traitement (52), par les moyens (10) de traitement du HSS (1), de cette demande, au moins par enregistrement du second identifiant public (IMPU2)
- une étape de création d'une notification envoyée au serveur (2) d'application et d'inclusion (53), par les moyens (10) de traitement du HSS (1), dans cette notification, des données représentatives de la modification de l'identifiant public,
- enregistrement (54), par les moyens (20) de traitement du serveur d'application, dans la base (21) de données des utilisateurs autorisés à accéder au service, en réponse à cette notification, du second identifiant public (IMPU2) avec les données qui étaient indexées selon le premier identifiant public (IMPU1).

Ainsi, en cas de changement d'identifiant public par un utilisateur, une demande de modification est envoyée au coeur de réseau supportant l'architecture IMS. Par exemple, un système (3) d'information permet de recueillir les modifications requises par les utilisateurs et de les transmettre aux serveurs (1, 2) de l'architecture IMS pour traitement, comme représenté sur la figure 1. Dans un mode de réalisation du système, les moyens (10) de traitement du HSS (1) sont donc agencés pour recevoir et traiter la demande de changement d'un premier identifiant public (IMPU1) vers un second identifiant public (IMPU2), en provenance d'au moins un système d'information (3) recueillant les données relatives aux utilisateurs de l'architecture IMS et à leurs souscriptions de services. Dans un mode de réalisation, le procédé selon l'invention pourra démarrer par une étape d'envoi (50) de la demande de changement d'un premier identifiant public (IMPU1) vers un second identifiant public (IMPU2) par au moins un système d'information (3) recueillant les données relatives aux utilisateurs de l'architecture IMS et à leurs souscriptions de services. Les systèmes (3) d'information sont en général en dehors de l'architecture IMS, comme représenté par les pointillés référencés (IMS) sur la figure 1, et sont développés de façon propriétaire. Ainsi, le système (3) d'information pourra, lorsqu'un utilisateur l'aura requis, être agencé pour émettre vers le HSS une demande de modification de l'identifiant public sous diverses formes (par exemple une commande « renommer » ou « Rename » selon la terminologie anglo-saxonne). Les normes de l'IMS ne définissent pas les commandes de « provisioning ». Les moyens (10) de traitement du HSS (1) devront donc être agencés spécifiquement pour pouvoir répondre à ce type de commande. Ainsi, les moyens (10) de traitement du HSS (1) sont également agencés pour traiter cette demande en enregistrant le second identifiant public (IMPU2) avec les données qui étaient indexées selon le premier identifiant public (IMPU1), dans la base (11) de données stockant au moins des données relatives à l'autorisation de l'accès d'utilisateurs à divers services supportés par l'architecture IMS. Suite à l'étape d'envoi (50) de la demande par le système d'information (3) vers le HSS (1), le procédé se poursuit par une étape de réception (51) et de traitement (52) de cette demande. Cette étape de traitement (52) de la demande de changement d'un premier identifiant public (IMPU1) vers un second identifiant public (IMPU2), par les moyens (10) de traitement du HSS (1), pourra comporter au moins une étape d'enregistrement (521) du second identifiant public (IMPU2) avec les données qui étaient indexées selon le premier identifiant public (IMPU1), dans la base (11) de données stockant au moins des données relatives à l'autorisation de l'accès d'utilisateurs à divers services supportés par l'architecture IMS. Cette étape d'enregistrement (521) pourra être associée à une étape de suppression du premier identifiant public (IMPU1). Ainsi, le HSS permet d'enregistrer la modification d'identifiant public tout en conservant les données qui étaient indexées selon l'identifiant public précédemment utilisé par l'utilisateur. Pour faciliter l'implémentation de cette fonction, le HSS (1) pourra intégrer une fonction « renommer » ou « rename » permettant cet enregistrement, par exemple grâce au module (101) d'autoprovisionnement, par exemple avec une suppression simultanée ou différée du premier identifiant public et des données associées, une fois ces dernières copiées en relation avec le second identifiant public (IMPU2). Les normes IMS pourront naturellement intégrer cette fonction dans le HSS à l'avenir.

D'autre part, la présente invention prévoit divers modes de réalisation pour la notification de la modification d'identifiant public. Les moyens (10) de traitement du HSS (1) sont agencés pour la création d'une notification à destination du serveur d'application pour la modification d'identifiant public. Dans un mode de réalisation, ces moyens (10) de traitement du HSS (1) sont agencés pour inclure (ou insérer), au cours de cette création, les données de modification au niveau d'au moins un champ standard laissé libre dans la notification selon le protocole standard. Dans ce mode de réalisation, l'interface Sh standard entre le HSS (1) et le serveur (2) d'application n'a pas à être modifiée. En effet, la norme décrit des champs standard laissés libres, appelés « transparent data » pour permettre aux opérateurs d'annexer des données aux profils de service (qui seront transmises dans les notifications standard). L'invention propose d'utiliser ce champ libre pour y incorporer une commande de modification d'identifiant public, telle que par exemple une commande renommer (rename impu1 impu2). Le HSS est donc agencé pour générer une telle commande dans la "transparent data" qui sera incluse dans une notification envoyée au serveur (2) d'application qui est agencé pour extraire cette commande de la notification et garder l'information correspondante en mémoire. Ainsi, le HSS (1) envoie cette notification au serveur (2) d'application qui est alors averti qu'une modification d'identifiant public est en cours et que les données indexées selon cet identifiant devront être enregistrées sous un autre identifiant. Dans cet exemple, les moyens (20) de traitement du serveur (2) d'application sont donc agencés pour recevoir cette notification et enregistrer temporairement les données de modification incluses dans la notification en attendant la suppression du premier identifiant. Ensuite, le HSS (1) demande la suppression du premier identifiant public, par exemple en créant et transmettant une seconde notification au serveur d'application. Les moyens (10) de traitement du HSS (1) sont alors agencés pour envoyer au serveur (2) d'application une notification de suppression des données relatives au premier identifiant public (IMPU1). Les moyens (20) de traitement du serveur (2) d'application sont alors agencés pour recevoir la notification de suppression et pour enregistrer le second identifiant public (IMPU2) avec les données qui étaient indexées selon le premier identifiant public (IMPU1), lors de la réception de la notification de suppression des données relatives au premier identifiant public (IMPU1), puis pour supprimer le premier identifiant public et les données qui y sont associées. D'après ce mode de réalisation du système d'autoprovisionnement, l'invention prévoit un mode de réalisation du procédé dans lequel, lors de l'étape de création de la notification à destination du serveur d'application, l'étape d'inclusion (53) des données représentatives de la modification de l'identifiant public dans la notification est adaptée à ces notifications standard dans l'interface Sh. Ainsi, cette étape d'inclusion (53) comporte alors une étape d'insertion (531), par les moyens (10) de traitement du HSS (1), de ces données au niveau d'au moins un champ standard laissé libre dans le profil de service. Selon le protocole standard, ce changement du profil entraîne l'envoi de la notification au serveur (2) d'application. Ainsi, en utilisant le protocole standard, la demande de modification est transmise au serveur (2) d'application. Dans le cas où le HSS ne transmettrait pas la notification automatiquement, par exemple à cause du fait que la seule modification incluse dans la notification soit celle définie dans le champ libre et que le HSS est agencé pour ne pas transmettre la notification si elle ne contient pas de modification standard, le HSS pourra être agencé spécifiquement pour envoyer cette notification au serveur (2) d'application. Ensuite, une étape de réception de la notification et d'enregistrement (532) temporaire, par les moyens (20) de traitement du serveur (2) d'application, des données de modification incluses dans la notification, permet de sauvegarder le contexte de changement d'IMPU défini par la demande de modification, en attendant la suppression du premier identifiant. Une fois que les moyens (10) de traitement du HSS (1) ont effectué la modification dans la base (11) de données du HSS (1) et transmis cette notification, ils mettent en oeuvre une étape de création et envoi (533) d'une notification de suppression des données relatives au premier identifiant public (IMPU1) vers le serveur (2) d'application. Ensuite, une étape de réception (534), par les moyens (20) de traitement du serveur (2) d'application, de la notification de suppression des données relatives au premier identifiant public (IMPU1), permet alors la mise en oeuvre de l'étape d'enregistrement (54) du second identifiant public (IMPU2), tout en rattachant les données de service de l'ex-identifiant public (IMPU1) au nouvel identifiant public (IMPU2) (grâce au contexte de changement d'IMPU défini par la demande de modification), et une étape de suppression du premier identifiant public (IMPU1) dans le serveur d'application.

Dans un autre mode de réalisation, l'invention propose d'améliorer la norme en y ajoutant une notification spécifique de la modification d'identifiant public. Les moyens (10) de traitement du HSS (1) sont toujours agencés pour la création d'une notification à destination du serveur d'application pour la modification d'identifiant public, mais via une notification (Sh) de renommage éventuellement incluse dans la norme. Par exemple une notification du type « renommer » ou « rename » pourra être prévue dans la norme définissant l'interface Sh. Ainsi, une notification du type "Rename IMPU1 to IMPU2" pourra être intégrée dans le système et le HSS (1) enverra ce type de notification au serveur d'application lorsqu'une modification d'identifiant public sera requise, en y incluant les données représentatives de la modification. Dans ce mode de réalisation, les moyens (10) de traitement du HSS (1) sont agencés pour générer une notification spécifique de la modification d'un premier identifiant public (IMPU1), vers un second identifiant public (IMPU2) et incorporer (inclure) dans cette notification spécifique les données représentatives de la modification. Cette notification spécifique pourra faire l'objet d'une standardisation (pour entrer par exemple dans la norme 3GPP). Elle pourra éventuellement être normalisée ou standardisée dans le protocole standard (interface Sh), de façon à ce que la norme IMS permette un autoprovisionnement complet selon la présente invention. Dans ce mode de réalisation, les moyens (20) de traitement du serveur (2) d'application sont agencés pour recevoir et traiter cette notification spécifique, notamment en enregistrant le second identifiant public (IMPU2) avec les données qui étaient indexées selon le premier identifiant public (IMPU1), lors de la réception de cette notification spécifique. De même, dans un mode de réalisation du procédé, l'étape d'inclusion (53) des données représentatives de la modification de l'identifiant public dans la notification sera adaptée à ce nouveau type de notification standardisée. Cette étape d'inclusion comporte alors une étape de création (535), par les moyens (10) de traitement du HSS (1), d'une notification spécifique de modification d'un premier identifiant public (IMPU1), vers un second identifiant public (IMPU2). Ensuite, les moyens (10) de traitement du HSS (1) mettent en oeuvre une étape d'incorporation (536), dans cette notification spécifique, des données représentatives de la modification, puis une étape d'envoi de cette notification spécifique. Enfin, une étape de réception (537) de cette notification spécifique par les moyens (20) de traitement du serveur (2) d'application, permet alors la mise en oeuvre de l'étape d'enregistrement (54) du second identifiant public (IMPU2). Dans ce mode de réalisation, on comprend que les étapes de réception de la notification et d'enregistrement (532) temporaire, les étapes de création et d'envoi (533) d'une notification de suppression et l'étape de réception (534), par les moyens (20) de traitement du serveur (2) d'application, de la notification de suppression ne sont plus nécessaires préalablement à l'étape d'enregistrement (54) du second identifiant public (IMPU2) par le serveur d'application (l'étape de de suppression du premier identifiant, postérieurement à cet enregistrement (54) n'étant plus nécessaire non plus).

On comprend de ce qui précède que, dans certains modes de réalisation, les moyens (10) de traitement du HSS (1) sont agencés pour propager le changement d'identifiant public (IMPU) au sein du réseau IMS. En effet, dans le cas où le HSS (1) reçoit la demande de changement d'IMPU (renommage) de la part d'un système d'information (3), il l'exécute et crée une notification à destination d'au moins un serveur d'application pour que ce(s) dernier(s) effectue(nt) également le changement avec les méthodes décrites. Ainsi, le changement d'identifiant, par exemple demandé par l'utilisateur auprès d'un système (3) d'information se trouve propagé au sein du réseau IMS (notamment jusqu'à tous les serveurs d'application concernés) grâce à la mise en oeuvre de l'invention.

D'autre part, il est prévu dans la norme que les moyens de traitement (10, 20) du HSS (1) et du serveur (2) d'application soient agencés pour établir un abonnement de notifications pour la mise à jour automatique des données de la base de données (21) du serveur (2) d'application lors de changements des données de la base de données (11) du HSS (1). Le HSS (1) est agencé pour conserver dans sa base (11) de données l'information définissant l'existence d'un abonnement de notification du serveur (2) d'application, pour que ce dernier reçoive une mise à jour lors de changements des données de l'utilisateur dans la base (11) de données du HSS (1). Le HSS (1) est configuré pour enregistrer cette information (initialement en relation avec le premier identifiant public) en relation avec le second identifiant public. Si le HSS (1) n'est pas agencé pour conserver cette information, l'invention prévoit que l'abonnement qui était établi pour le premier identifiant (IMPU1) soit renouvelé pour le second identifiant (IMPU2). Pour cela, lorsque le HSS ne conserve pas l'abonnement dans sa base (11) de données stockant au moins des données relatives à l'autorisation de l'accès d'utilisateurs à divers services supportés par l'architecture IMS, suite à la modification, les moyens (20) de traitement du serveur (2) d'application sont donc agencés pour requérir, auprès du HSS (1), un nouvel abonnement de notification pour le second identifiant public (IMPU2) suite à l'enregistrement de la modification. De façon connue en soi, le HSS (1) est alors agencé pour créer ce nouvel abonnement suite à la réception de cette requête d'abonnement pour le second identifiant (IMPU2). Lorsque le HSS (1) conserve l'abonnement suite à la modification, les moyens (10) de traitement du HSS (1) sont donc agencés pour modifier l'identifiant public correspondant à l'abonnement dans les données de sa base (11) de données d'autorisation de l'accès d'utilisateurs. Ainsi, le procédé peut comporter des étapes d'échanges (par exemple des échanges de notifications, ou simplement une requête depuis le serveur d'application vers le HSS ou même une notification d'abonnement directement depuis le HSS vers le serveur d'application) entre les moyens de traitement (10, 20) du HSS (1) et du serveur (2) d'application permettant d'établir un abonnement de notifications pour la mise à jour automatique des données de la base de données (21) du serveur (2) d'application lors de changements des données de la base de données (11) du HSS (1). Lorsque le HSS ne conserve pas l'abonnement dans la base (11) de données stockant au moins des données relatives à l'autorisation de l'accès d'utilisateurs à divers services supportés par l'architecture IMS, le procédé comporte, suite à la modification de l'identifiant public, une étape de requête (55), par les moyens (20) de traitement du serveur (2) d'application, par exemple grâce au module (201) d'autoprovisionnement, auprès du HSS (1), d'un nouvel abonnement de notification pour le second identifiant public (IMPU2) suite à l'enregistrement de la modification. Le HSS (1) met alors en oeuvre une étape de création de ce nouvel abonnement. Lorsque le HSS (1) conserve l'abonnement dans sa base (11) de données stockant au moins des données relatives à l'autorisation de l'accès d'utilisateurs à divers services supportés par l'architecture IMS, le procédé comporte une étape de modification (56), par les moyens (10) de traitement du HSS (1), par exemple grâce au module (101) d'autoprovisionnement, de l'identifiant public correspondant à l'abonnement dans les données de la base (11) de données d'autorisation de l'accès d'utilisateurs. Ainsi, selon ces diverses possibilités, toutes les données utiles pour la fourniture des services supportés par l'architecture IMS peuvent être conservées pour chacun des utilisateurs, même lors d'un changement de leur identifiant public.

On comprend donc que l'invention a atteint le but qu'elle s'était fixée de permettre l'autoprovisionnement en cas de changement d'identifiant public d'un utilisateur sans perdre les données de l'utilisateur. De même, on comprend à la lecture de la présente description que l'invention pourra consister en une amélioration de la norme existante par l'ajout d'une notification spécifique de ces changements d'IMPU ou par l'utilisation des notifications actuellement définies dans la norme par l'ajout dans ces notifications, de données relatives a ces changements d'IMPU. L'invention porte donc également sur un serveur (1) d'authentification d'utilisateurs, dit HSS, pour l'autoprovisionnement d'au moins un service dans au moins un serveur d'application d'au moins une architecture IMS. Ce HSS pourra être utilisé pour permettre l'autoprovisionnement d'un ou plusieurs serveurs (2) d'application. Ce HSS est caractérisé en ce que ses moyens (10) de traitement sont agencés en outre pour, d'une part, recevoir et traiter une demande de changement d'un premier identifiant public (IMPU1) vers un second identifiant public (IMPU2), pour un utilisateur provisionné dans le HSS (1) et le serveur (2) d'application, et pour, d'autre part, inclure, dans une notification envoyée au serveur (2) d'application, des données représentatives de la modification de l'identifiant public. De même, l'invention porte également sur un serveur (2) d'application pour l'autoprovisionnement d'au moins un service dans au moins un serveur d'application d'au moins une architecture IMS. Ce serveur d'application pourra être utilisé en conjonction avec un HSS tel que décrit ici (soit qui envoie des notifications spécifiques, soit qui envoie des notifications incluant des données relatives à la modification d'IMPU) ou pour coopérer avec un HSS utilisant une fonction « renommer » tel qu'expliqué précédemment. Ce serveur d'application est caractérisé en ce que ses moyens (20) de traitement sont agencés en outre pour enregistrer dans la base (21) de données des utilisateurs autorisés à accéder au service, en réponse à une notification contenant des données représentatives d'une modification d'un premier identifiant public (IMPU1) vers un second identifiant public (IMPU2), pour un utilisateur provisionné dans la base de données du HSS (1) et autoprovisionné dans la base de données du serveur (2) d'application (enregistré auprès du HSS (1) et du serveur (2) d'application), le second identifiant public (IMPU2) avec les données qui étaient indexées selon le premier identifiant public (IMPU1).

## Revendications

1. Système d'autoprovisiorinement d'au moins un service dans au moins un serveur d'application d'au moins une architecture IMS, l'architecture IMS comprenant au moins un serveur (1) d'authentification d'utilisateurs, dit HSS, comportant des moyens (10) de traitement accédant à au moins une base de données (11) stockant au moins des données relatives à l'autorisation de l'accès d'utilisateurs à divers services supportés par l'architecture IMS, ces données étant indexées selon au moins un identifiant public, dit IMPU, des utilisateurs, et au moins un serveur (2) d'application comportant des moyens (20) de traitement agencés pour fournir au moins un service aux utilisateurs et accéder à au moins une base de données (21) stockant au moins des données relatives aux utilisateurs autorisés à accéder audit service, indexées selon au moins un identifiant public des utilisateurs, le HSS (1) et le serveur (2) d'application communiquant via des notifications normalisées selon un protocole standard, les moyens (10) de traitement du HSS (1) étant agencés en outre pour, d'une part, recevoir une demande de changement d'un premier identifiant public (IMPU1) vers un second identifiant public (IMPU2), pour un utilisateur provisionné dans le HSS (1) et autoprovisionné dans le serveur (2) d'application, et traiter cette demande, au moins par la création d'un second identifiant public (IMPU2) et pour, d'autre part, générer une notification envoyée au serveur (2) d'application, en y incluant au moins des données représentatives de la modification de l'identifiant public, les moyens (20) de traitement du serveur d'application étant agencés en outre pour traiter cette notification, au moins en enregistrant dans la base (21) de données des utilisateurs autorisés à accéder au service, en réponse à cette notification, le second identifiant public (IMPU2) avec les données qui étaient indexées selon le premier identifiant public (IMPU1), les moyens de traitement (10, 20) du HSS (1) et du serveur (2) d'application étant agencés pour établir un abonnement de notifications pour la mise à jour automatique des données de la base de données (21) du serveur (2) d'application lors de changements des données de la base de données (11) du HSS (1), les moyens (20) de traitement du serveur (2) d'application étant agencés pour requérir, auprès du HSS (1), un nouvel abonnement de notification pour le second identifiant public (IMPU2) suite à l'enregistrement de la modification lorsque le HSS ne conserve pas l'abonnement dans la base (11) de données stockant au moins des données relatives à l'autorisation de l'accès d'utilisateurs à divers services supportés par l'architecture IMS, suite à la modification, et les moyens (10) de traitement du HSS (1) étant agencés pour créer ce nouvel abonnement lors de la réception de cette requête ou pour modifier l'identifant public correspondant à l'abonnement dans les données de la base (11) de données stockant au moins des données relatives à l'autorisation de l'accès d'utilisateurs lorsque le HSS (1) conserve l'abonnement suite à la modification.

2. Système selon la revendication 1, **caractérisé en ce que** les moyens (10) de traitement du HSS (1) sont agencés pour inclure les données de modification au niveau d'au moins un champ standard laissé libre dans la notification selon le protocole standard, et envoyer cette notification, puis pour envoyer au serveur (2) d'application une notification de suppression des données relatives au premier identifiant public (IMPU1), les moyens (20) de traitement du serveur (2) d'application étant agencés pour recevoir cette notification selon le protocole standard, pour enregistrer temporairement les données de modification incluses dans la notification en attendant la suppression du premier identifiant et pour enregistrer le second identifiant public (IMPU2) avec les données qui étaient indexées selon le premier identifiant public (IMPU1), en supprimant le premier identifiant public (IMPU1), lors de la réception de la notification de suppression des données relatives au premier identifiant public (IMPU1).

3. Système selon la revendication 1, **caractérisé en ce que** les moyens (10) de traitement du HSS (1) sont agencés pour générer une notification spécifique de modification d'un premier identifiant public (IMPU1), vers un second identifiant public (IMPU2), et incorporer dans cette notification spécifique les données représentatives de la modification, et envoyer cette notification spécifique au serveur (2) d'application, les moyens (20) de traitement du serveur (2) d'application étant agencés pour enregistrer le second identifiant public (IMPU2) avec les données qui étaient indexées selon le premier identifiant public (IMPU1), lors de la réception de cette notification spécifique.

4. Système selon une des revendications 1 à 3, **caractérisé en ce que** les moyens (10) de traitement du HSS (1), agencés pour recevoir et traiter la demande de changement d'un premier identifiant public (IMPU1) vers un second identifiant public (IMPU2), sont agencés pour traiter cette demande notamment en enregistrant le second identifiant public (IMPU2) avec les données qui étaient indexées selon le premier identifiant public (IMPU1), dans la base (11) de données stockant au moins des données relatives à l'autorisation de l'accès d'utilisateurs à divers services supportés par l'architecture IMS.

5. Système selon la revendication 4, **caractérisé en ce que** les moyens (10) de traitement du HSS (1) sont agencés pour recevoir et traiter la demande de changement d'un premier identifiant public (IMPU1) vers un second identifiant public (IMPU2) en provenance d'au moins un système d'information (3) recueillant les données relatives aux utilisateurs de l'architecture IMS et à leurs souscriptions de services.

6. Procédé d'autoprovisionnement d'au moins un service dans au moins un serveur d'application d'au moins une architecture IMS, l'architecture IMS comprenant au moins un serveur (1) d'authentification d'utilisateurs, dit HSS, comportant des moyens (10) de traitement accédant à au moins une base de données (11) stockant au moins des données relatives à l'autorisation de l'accès d'utilisateurs à divers services supportés par l'architecture IMS, ces données étant indexées selon au moins un identifiant public, dit IMPU, des utilisateurs, et au moins un serveur (2) d'application comportant des moyens (20) de traitement agencés pour fournir
au moins un service aux utilisateurs et accéder à au moins une base de données (21) stockant au moins des données relatives aux utilisateurs autorisés à accéder audit service, indexées selon au moins un identifiant public des utilisateurs, le HSS (1) et le serveur (2) d'application communiquant via des notifications normalisées selon un protocole standard, le procédé comportant les étapes suivantes :
- réception (51), par les moyens (10) de traitement du HSS (1), d'une demande de changement d'un premier identifiant public (IMPU1) vers un second identifiant public (IMPU2), pour un utilisateur provisionné dans la base de données du HSS (1) et autoprovisionné dans la base de données du serveur (2) d'application, puis traitement (52) de cette demande, au moins par la création d'un second identifiant public (IMPU2),
- création, par les moyens (10) de traitement du HSS (1), d'une notification envoyée au serveur (2) d'application, et inclusion (53), dans cette notification, des données représentatives de la modification de l'identifiant public,
- réception et traitement de cette notification, par les moyens (20) de traitement du serveur d'application, au moins par enregistrement (54) dans la base (21) de données des utilisateurs du service, en réponse à cette notification, du second identifiant public (IMPU2) avec les données qui étaient indexées selon le premier identifiant public (IMPU1),
des étapes d'échanges de notifications entre les moyens de traitement (10, 20) du HSS (1) et du serveur (2) d'application permettent d'établir un abonnement de notifications pour la mise à jour automatique des données de la base de données (21) du serveur (2) d'application lors de changements des données de la base de données (11) du HSS (1), le procédé comportant, suite à la modification de l'identifiant public, au moins une des étapes suivantes :
- requête (55), par les moyens (20) de traitement du serveur (2) d'application, auprès du HSS (1), d'un nouvel abonnement de notification pour le second identifiant public (IMPU2) suite à l'enregistrement de la modification lorsque le HSS ne conserve pas l'abonnement dans la base (11) de données stockant au moins des données relatives à l'autorisation de l'accès d'utilisateurs à divers services supportés par l'architecture IMS, et création de l'abonnement par les moyens (10) de traitement du HSS (1) ou
- modification (56), par les moyens (10) de traitement du HSS (1), de l'identifiant public correspondant à l'abonnement dans les données de la base (21) de données des utilisateurs autorisés à accéder au service ou création d'un nouvel abonnement pour le second identifiant public, à partir de l'abonnement du premier identifiant public, lorsque le HSS (1) conserve l'abonnement dans la base (11) de données stockant au moins des données relatives à l'autorisation de l'accès d'utilisateurs à divers services supportés par l'architecture IMS.

7. Procédé selon la revendication 6, **caractérisé en ce que** l'étape d'inclusion (53) des données représentatives de la modification de l'identifiant public dans la notification comporte les étapes suivantes :
- insertion (531), par les moyens (10) de traitement du HSS (1), de ces données au niveau d'au moins un champ standard laissé libre dans la notification selon le protocole standard, et envoi de la notification,
- réception de la notification selon le protocole standard et enregistrement (532) temporaire, par les moyens (20) de traitement du serveur (2) d'application, des données de modification incluses dans la notification, en attendant la suppression du premier identifiant
- création et envoi (533), par les moyens (10) de traitement du HSS (1), d'une notification de suppression des données relatives au premier identifiant public (IMPU1) vers le serveur (2) d'application,
- réception (534), par les moyens (20) de traitement du serveur (2) d'application, de la notification de suppression des données relatives au premier identifiant public (IMPU1), permettant alors la mise en oeuvre de l'étape d'enregistrement (54) du second identifiant public (IMPU2) et une étape de suppression du premier identifiant public (IMPU1).

8. Procédé selon la revendication 6, **caractérisé en ce que** l'étape d'inclusion (53) des données représentatives de la modification de l'identifiant public dans la notification comporte les étapes suivantes :
- création (535), par les moyens (10) de traitement du HSS (1), d'une notification spécifique de modification d'un premier identifiant public (IMPU1), vers un second identifiant public (IMPU2),
- incorporation (536), dans cette notification spécifique, des données représentatives de la modification, et envoi de la notification,
- réception (537) de cette notification spécifique par les moyens (20) de traitement du serveur (2) d'application, permettant alors la mise en oeuvre de l'étape d'enregistrement (54) du second identifiant public (IMPU2).

9. Procédé selon une des revendications 6 à 8, **caractérisé en ce que** l'étape de traitement (52) de la demande de changement d'un premier identifiant public (IMPU1) vers un second identifiant public (IMPU2), par les moyens (10) de traitement du HSS (1), suite à la réception (51) de cette demande, comporte une étape d'enregistrement (521) du second identifiant public (IMPU2) avec les données qui étaient indexées selon le premier identifiant public (IMPU1), dans la base (11) de données stockant au moins des données relatives à l'autorisation de l'accès d'utilisateurs à divers services supportés par l'architecture IMS.

10. Procédé selon la revendication 9, **caractérisé en ce que** l'étape de réception (51) de la demande de modification par les moyens (10) de traitement du HSS (1) est précédée d'une étape d'envoi (50) de la demande de changement d'un premier identifiant public (IMPU1) vers un second identifiant public (IMPU2) par au moins un système d'information (3) recueillant les données relatives aux utilisateurs de l'architecture IMS et à leurs souscriptions de services.

11. Serveur (1) d'authentification d'utilisateurs, dit HSS, pour l'autoprovisionnement d'au moins un service dans au moins un serveur d'application d'au moins une architecture IMS, l'architecture IMS comprenant au moins un HSS (1) comportant des moyens (10) de traitement accédant à au moins une base de données (11) stockant au moins des données relatives à l'autorisation de l'accès d'utilisateurs à divers services supportés par l'architecture IMS, ces données étant indexées selon au moins un identifiant public, dit IMPU, des utilisateurs, et au moins un serveur (2) d'application comportant des moyens (20) de traitement agencés pour fournir au moins un service aux utilisateurs et accéder à au moins une base de données (21) stockant au moins des données relatives aux utilisateurs autorisés à accéder audit service, indexées selon au moins un identifiant public des utilisateurs, le HSS (1) et le serveur (2) d'application communiquant via des notifications normalisées selon un protocole standard, les moyens (10) de traitement du HSS (1) étant agencés en outre pour, d'une part, recevoir une demande de changement d'un premier identifiant public (IMPU1) vers un second identifiant public (IMPU2), pour un utilisateur provisionné dans la base de données du HSS (1) et autoprovisionné dans la base de données du serveur (2) d'application, cette demande, au moins par la création d'un second identifiant public (IMPU2) et pour, d'autre part, générer une notification envoyée au serveur (2) d'application, en y incluant au moins des données représentatives de la modification de l'identifiant public, les moyens de traitement du HSS (1) étant agencés pour établir un abonnement de notifications pour la mise à jour automatique des données de la base de données (21) du serveur (2) d'application lors de changements des données de la base de données (11) du HSS (1), les moyens (10) de traitement du HSS (1) étant agencés ou bien pour créer un nouvel abonnement lors de la réception d'une requête d'un nouvel abonnement par le serveur d'application lorsque le HSS ne conserve pas l'abonnement dans la base (11) de données stockant au moins des données relatives à l'autorisation de l'accès d'utilisateurs à divers services supportés par l'architecture IMS, suite à la modification ou bien pour modifier l'identifiant public correspondant à l'abonnement dans les données de la base (11) de données stockant au moins des données relatives à l'autorisation de l'accès d'utilisateurs lorsque le HSS (1) conserve l'abonnement suite à la modification.

12. Serveur (2) d'application pour l'autoprovisionnement d'au moins un service dans au moins un serveur d'application d'au moins une architecture IMS, l'architecture IMS comprenant au moins un serveur (1) d'authentification d'utilisateurs, dit HSS, comportant des moyens (10) de traitement accédant à au moins une base de données (11) stockant au moins des données relatives à l'autorisation de l'accès d'utilisateurs à divers services supportés par l'architecture IMS, ces données étant indexées selon au moins un identifiant public, dit IMPU, des utilisateurs, et au moins un serveur (2) d'application comportant des moyens (20) de traitement agencés pour fournir au moins un service aux utilisateurs et accéder à au moins une base de données (21) stockant au moins des données relatives aux utilisateurs autorisés à accéder audit service, indexées selon au moins un identifiant public des utilisateurs, le HSS (1) et le serveur (2) d'application communiquant via des notifications normalisées selon un protocole standard, les moyens (20) de traitement du serveur d'application étant agencés en outre pour recevoir et traiter une notification provenant du HSS (1) et contenant des données représentatives d'une modification d'un premier identifiant public (IMPU1) vers un second identifiant public (IMPU2), pour un utilisateur provisionné dans la base de données du HSS (1) et autoprovisionné dans la base de données du serveur (2) d'application, au moins en enregistrant, dans la base (21) de données des utilisateurs autorisés à accéder au service, le second identifiant public (IMPU2) avec les données qui étaient indexées selon le premier identifiant public (IMPU1), les moyens de traitement du serveur (2) d'application étant agencés pour établir un abonnement de notifications pour la mise à jour automatique des données de la base de données (21) du serveur (2) d'application lors de changements des données de la base de données (11) du HSS (1), les moyens (20) de traitement du serveur (2) d'application étant agencés pour requérir, auprès du HSS (1), un nouvel abonnement de notification pour le second identifiant public (IMPU2) suite à l'enregistrement de la modification lorsque le HSS ne conserve pas l'abonnement dans la base (11) de données stockant au moins des données relatives à l'autorisation de l'accès d'utilisateurs à divers services supportés par l'architecture IMS, suite à la modification.

## Patentansprüche

1. System zum Autoprovisionieren von wenigstens einem Dienst in wenigstens einem Anwendungsserver von wenigstens einer IMS-Architektur, wobei die IMS-Architektur Folgendes umfasst: wenigstens einen Benutzerauthentifizierungsserver (1), HSS genannt, der Verarbeitungsmittel (10) umfasst, die auf wenigstens eine Datenbank (11) zugreifen, die wenigstens Daten mit Bezug auf die Autorisierung eines Benutzerzugriffs auf verschiedene von der IMS-Architektur unterstützte Dienste speichert, wobei diese Daten wenigstens gemäß einer IMPU genannten öffentlichen Kennung von Benutzern indexiert sind, und wenigstens einen Anwendungsserver (2), der Verarbeitungsmittel (20) umfasst, die zum Liefern wenigstens eines Dienstes zu den Benutzern und zum Zugreifen auf wenigstens eine Datenbank (21) ausgelegt sind, die wenigstens Daten mit Bezug auf die zum Zugreifen auf diesen Dienst autorisierten Benutzern speichert, indexiert gemäß wenigstens einer öffentlichen Kennung der Benutzer, wobei der HSS (1) und der Anwendungsserver (2) über gemäß einem Standardprotokoll normalisierte Mitteilungen kommunizieren, wobei die Verarbeitungsmittel (10) des HSS (1) ferner so ausgelegt sind, dass sie einerseits eine Bitte zum Ändern einer ersten öffentlichen Kennung (IMPU1) in eine zweite öffentliche Kennung (IMPU2) für einen in dem HSS (1) provisionierten und in dem Anwendungsserver (2) autoprovisionierten Benutzer empfangen und diese Bitte wenigstens durch Erzeugen einer zweiten öffentlichen Kennung (IMPU2) verarbeiten, und andererseits eine zu dem Anwendungsserver (2) gesendete Mitteilung erzeugen, die wenigstens für die Modifikation der öffentlichen Kennung repräsentative Daten enthält, wobei die Verarbeitungsmittel (20) des Anwendungsservers ferner zum Verarbeiten dieser Modifikation wenigstens durch Registrieren, als Reaktion auf diese Mitteilung, der zweiten öffentlichen Kennung (IMPU2) mit den gemäß der ersten öffentlichen Kennung (IMPU1) indexierten Daten in der Datenbank (21) der zum Zugreifen auf den Dienst autorisierten Benutzer ausgelegt sind, wobei die Verarbeitungsmittel (10, 20) des HSS (1) und des Anwendungsservers (2) zum Einrichten eines Abonnements von Mitteilungen für die automatische Aktualisierung von Daten der Datenbank (21) des Anwendungsservers (2) während des Änderns von Daten der Datenbank (11) des HSS (1)ausgelegt sind, wobei die Verarbeitungsmittel (20) des Anwendungsservers (2) zum Anfordern eines neuen Mitteilungsabonnements beim HSS (1) für die zweite öffentliche Kennung (IMPU2) nach der Registrierung der Modifikation ausgelegt sind, wenn der HSS das Abonnement nach der Modifikation nicht in der Datenbank (11) konserviert, die wenigstens Daten mit Bezug auf die Autorisierung des Zugriffs von Benutzern auf diverse von der IMS-Architektur unterstützte Dienste speichert, und die Verarbeitungsmittel (10) des HSS (1) zum Erzeugen dieses neuen Abonnements beim Empfang dieser Anforderung oder zum Modifizieren der öffentlichen Kennung entsprechend dem Abonnement in den Daten der Datenbank (11) ausgelegt sind, die wenigstens Daten mit Bezug auf die Autorisierung des Benutzerzugriffs speichert, wenn der HSS (1) das Abonnement nach der Modifikation konserviert.

2. System nach Anspruch 1, **dadurch gekennzeichnet, dass** die Verarbeitungsmittel (10) des HSS (1) ausgelegt sind zum Einschließen der Modifikationsdaten in wenigstens ein in der Mitteilung gemäß dem Standardprotokoll freigelassenes Standardfeld und zum Senden dieser Mitteilung, dann zum Senden einer Mitteilung zum Unterdrücken von Daten mit Bezug auf die erste öffentliche Kennung (IMPU1) zum Anwendungsserver (2), wobei die Verarbeitungsmittel (20) des Anwendungsservers (2) ausgelegt sind zum Empfangen dieser Mitteilung gemäß dem Standardprotokoll, zum vorübergehenden Registrieren der in der Mitteilung enthaltenen Modifikationsdaten beim Warten auf das Unterdrücken der ersten Kennung, und zum Registrieren der zweiten öffentlichen Kennung (IMPU2) mit den gemäß der ersten öffentlichen Kennung (IMPU1) indexierten Daten, beim Unterdrücken der ersten öffentlichen Kennung (IMPU1) beim Empfang der Mitteilung zum Unterdrücken der Daten mit Bezug auf die erste öffentliche Kennung (IMPU1).

3. System nach Anspruch 1, **dadurch gekennzeichnet, dass** die Verarbeitungsmittel (10) des HSS (1) ausgelegt sind zum Erzeugen einer für die Modifikation einer ersten öffentlichen Kennung (IMPU1) spezifischen Mitteilung zu einer zweiten öffentlichen Kennung (IMPU2) und zum Integrieren der für die Modifikation repräsentativen Daten in diese spezifische Mitteilung, und zum Senden dieser spezifischen Mitteilung zum Anwendungsserver (2), wobei die Verarbeitungsmittel (20) des Anwendungsservers (2) ausgelegt sind zum Registrieren der zweiten öffentlichen Kennung (IMPU2) mit den gemäß der ersten öffentlichen Kennung (IMPU1) indexierten Daten beim Empfang dieser spezifischen Mitteilung.

4. System nach einem der Ansprüche 1 bis 3, **dadurch gekennzeichnet, dass** die Verarbeitungsmittel (10) des HSS (1), die ausgelegt sind zum Empfangen und Verarbeiten der Bitte zum Ändern einer ersten öffentlichen Kennung (IMPU1) in eine zweite öffentliche Kennung (IMPU2), ausgelegt sind zum Verarbeiten dieser Bitte insbesondere durch Registrieren der zweiten öffentlichen Kennung (IMPU2) mit den gemäß der ersten öffentlichen Kennung (IMPU1) indexierten Daten in der Datenbank (11), die wenigstens Daten mit Bezug auf die Autorisierung eines Benutzerzugriffs auf diverse von der IMS-Architektur unterstützte Dienste speichert.

5. System nach Anspruch 4, **dadurch gekennzeichnet, dass** die Verarbeitungsmittel (10) des HSS (1) ausgelegt sind zum Empfangen und Verarbeiten der Bitte zum Ändern einer ersten öffentlichen Kennung (IMPU1) in eine zweite öffentliche Kennung (IMPU2), die von wenigstens einem Informationssystem (3) kommt, das die Daten mit Bezug auf die Benutzer der IMS-Architektur und deren Dienstesubskriptionen erfasst.

6. Verfahren zum Autoprovisionieren von wenigstens einem Dienst in wenigstens einem Anwendungsserver von wenigstens einer IMS-Architektur, wobei die IMS-Architektur Folgendes umfasst: wenigstens einen Benutzerauthentifizierungsserver (1), HSS genannt, der Verarbeitungsmittel (10) umfasst, die auf wenigstens eine Datenbank (11) zugreifen, die wenigstens Daten mit Bezug auf die Autorisierung eines Zugriffs von Benutzern auf diverse von der IMS-Architektur unterstützte Dienste speichert, wobei diese Daten gemäß wenigstens einem IMPU genannten öffentlichen Schlüssel von Benutzern indexiert sind, und wenigstens einen Anwendungsserver (2), der Verarbeitungsmittel (20) umfasst, die ausgelegt sind zum Liefern von wenigstens einem Dienst zu den Benutzern und zum Zugreifen auf wenigstens eine Datenbank (21), die wenigstens gemäß wenigstens einer öffentlichen Kennung von Benutzern indexierte Daten mit Bezug auf die Benutzer speichert, die zum Zugreifen auf diesen Dienst autorisiert sind, wobei der HSS (1) und der Anwendungsserver (2) über gemäß einem Standardprotokoll normalisierte Mitteilungen kommunizieren, wobei das Verfahren die folgenden Schritte beinhaltet:
- Empfangen (51), durch die Verarbeitungsmittel (10) des HSS (1), einer Bitte zum Ändern einer ersten öffentlichen Kennung (IMPU1) in eine zweite öffentliche Kennung (IMPU2), für einen Benutzer, der in der Datenbank des HSS (1) provisioniert und in der Datenbank des Anwendungsservers (2) autoprovisioniert ist, dann Verarbeiten (52) dieser Bitte wenigstens durch Erzeugen einer zweiten öffentlichen Kennung (IMPU2),
- Erzeugen, durch die Verarbeitungsmittel (10) des HSS (1), einer zu dem Anwendungsserver (2) gesendeten Mitteilung und Einschließen (53) von Daten in diese Mitteilung, die für die Modifikation der öffentlichen Kennung repräsentativ sind,
- Empfangen und Verarbeiten dieser Mitteilung durch die Verarbeitungsmittel (20) des Anwendungsservers wenigstens durch Registrieren (54) der zweiten öffentlichen Kennung (IMPU2) mit den gemäß der ersten öffentlichen Kennung (IMPU1) indexierten Daten in der Datenbank (21) von Benutzern des Dienstes als Reaktion auf diese Mitteilung,
Schritte des Austauschens von Mitteilungen zwischen den Verarbeitungsmitteln (10, 20) des HSS (1) und des Anwendungsservers (2), ermöglichen es, dass ein Abonnement von Mitteilungen für die automatische Aktualisierung der Daten der Datenbank (21) des Anwendungsservers (2) beim Austauschen von Daten der Datenbank (11) des HSS (1) eingerichtet werden kann, wobei das Verfahren nach der Modifikation der öffentlichen Kennung wenigstens einen der folgenden Schritte beinhaltet:
- Anfordern (55), durch die Verarbeitungsmittel (20) des Anwendungsservers (2) beim HSS (1), eines neuen Mitteilungsabonnements für die zweite öffentliche Kennung (IMPU2) nach der Registrierung der Modifikation, wenn der HSS das Abonnement nicht in der Datenbank (11) konserviert, die wenigstens Daten mit Bezug auf die Autorisierung des Benutzerzugriffs auf diverse von der IMS-Architektur unterstützte Dienste speichert, und Erzeugen des Abonnements durch die Verarbeitungsmittel (10) des HSS (1), oder
- Modifizieren (56), durch die Verarbeitungsmittel (10) des HSS (1), der öffentlichen Kennung entsprechend dem Abonnement in den Daten der Datenbank (21) von Benutzern, die zum Zugreifen auf den Dienst autorisiert sind, oder Erzeugen eines neuen Abonnements für die zweite öffentliche Kennung auf der Basis des Abonnements der ersten öffentlichen Kennung, wenn der HSS (1) das Abonnement in der Datenbank (11) konserviert, die wenigstens Daten mit Bezug auf die Autorisierung des Benutzerzugriffs auf diverse von der IMS-Architektur unterstützte Dienste speichert.

7. Verfahren nach Anspruch 6, **dadurch gekennzeichnet, dass** der Schritt des Einschließens (53) von den für die Modifikation der öffentlichen Kennung repräsentativen Daten in die Mitteilung die folgenden Schritte beinhaltet:
- Einfügen (531), durch die Verarbeitungsmittel (10) des HSS (1), dieser Daten in wenigstens ein in der Mitteilung freigelassenes Standardfeld gemäß dem Standardprotokoll und Senden der Mitteilung,
- Empfangen der Mitteilung gemäß dem Standardprotokoll und vorübergehendes Registrieren (532), durch die Verarbeitungsmittel (20) des Anwendungsservers (2), der in die Mitteilung eingeschlossenen Modifikationsdaten und Warten auf die Unterdrückung der ersten Kennung,
- Erzeugen und Senden (533), durch die Verarbeitungsmittel (10) des HSS (1), einer Mitteilung des Unterdrückens der Daten mit Bezug auf die erste öffentliche Kennung (IMPU1) zum Anwendungsserver (2),
- Empfangen (534), durch die Verarbeitungsmittel (20) des Anwendungsservers (2), der Mitteilung zum Unterdrücken der Daten mit Bezug auf die erste öffentliche Kennung (IMPU1), so dass der Schritt des Registrierens (54) der zweiten öffentlichen Kennung (IMPU2) und ein Schritt des Unterdrückens der ersten öffentlichen Kennung (IMPU1) ausgeführt werden können.

8. Verfahren nach Anspruch 6, **dadurch gekennzeichnet, dass** der Schritt des Einschließens (53) von Daten, die die Modifikation der öffentlichen Kennung repräsentieren, in die Mitteilung die folgenden Schritte beinhaltet:
- Erzeugen (535), durch die Verarbeitungsmittel (10) des HSS (1), einer für die Modifikation einer ersten öffentlichen Kennung (IMPU1) spezifischen Mitteilung in eine zweite öffentliche Kennung (IMPU2),
- Integrieren (536) von die Modifikation repräsentierenden Daten in diese spezifische Mitteilung und Senden der Mitteilung,
- Empfangen (537) dieser spezifischen Mitteilung durch die Verarbeitungsmittel (20) des Anwendungsservers (2), so dass der Schritt des Registrierens (54) der zweiten öffentlichen Kennung (IMPU2) ausgeführt werden kann.

9. Verfahren nach einem der Ansprüche 6 bis 8, **dadurch gekennzeichnet, dass** der Schritt des Verarbeitens (52) der Bitte zum Ändern einer ersten öffentlichen Kennung (IMPU1) in eine zweite öffentliche Kennung (IMPU2), durch die Verarbeitungsmittel (10) des HSS (1), nach dem Empfang (51) dieser Bitte einen Schritt des Registrierens (521) der zweiten öffentlichen Kennung (IMPU2) mit den gemäß der ersten öffentlichen Kennung (IMPU1) indexierten Daten in der Datenbank (11) beinhaltet, die wenigstens Daten in Bezug auf die Autorisierung des Benutzerzugriffs auf diverse von der IMS-Architektur unterstützte Dienste speichert.

10. Verfahren nach Anspruch 9, **dadurch gekennzeichnet, dass** dem Schritt des Empfangens (51) der Bitte zum Modifizieren durch die Verarbeitungsmittel (10) des HSS (1) ein Schritt des Sendens (51) der Bitte zum Ändern einer ersten öffentlichen Kennung (IMPU1) in eine zweite öffentliche Kennung (IMPU2) durch wenigstens ein Informationssystem (3) vorangeht, das die Daten mit Bezug auf die Benutzer der IMS-Architektur und deren Dienstesubskriptionen sammelt.

11. Benutzerauthentifizierungsserver (1), HSS genannt, zum Autoprovisionieren von wenigstens einem Dienst in wenigstens einem Anwendungsserver von wenigstens einer IMS-Architektur, wobei die IMS-Architektur Folgendes umfasst: wenigstens einen HSS (1), der Verarbeitungsmittel (10) umfasst, die auf wenigstens eine Datenbank (11) zugreifen, die wenigstens Daten mit Bezug auf die Autorisierung eines Benutzerzugriffs auf diverse von der IMS-Architektur unterstützte Dienste speichert, wobei diese Daten gemäß wenigstens einer öffentlichen Kennung, IMPU genannt, von Benutzern indexiert sind, und wenigstens einen Anwendungsserver (2), der Verarbeitungsmittel (20) umfasst, die ausgelegt sind zum Liefern von wenigstens einem Dienst zu den Benutzern und zum Zugreifen auf wenigstens eine Datenbank (21), die wenigstens gemäß wenigstens einer öffentlichen Kennung von Benutzern indexierte Daten mit Bezug auf die Benutzer speichert, die zum Zugreifen auf diesen Dienst autorisiert sind, wobei der HSS (1) und der Anwendungsserver (2) über gemäß einem Standardprotokoll normalisierte Mitteilungen miteinander kommunizieren, wobei die Verarbeitungsmittel (10) des HSS (1) ferner so ausgelegt sind, dass sie einerseits eine Bitte zum Ändern einer ersten öffentlichen Kennung (IMPU1) in eine zweite öffentliche Kennung (IMPU2) für einen Benutzer empfangen, der in der Datenbank des HSS (1) provisioniert und in der Datenbank des Anwendungsservers (2) autoprovisioniert ist, diese Bitte, wenigstens durch Erzeugen einer zweiten öffentlichen Kennung (IMPU2), und andererseits eine zum Anwendungsserver (2) gesendete Mitteilung unter Einschluss wenigstens der die Modifikation der öffentlichen Kennung repräsentierenden Daten erzeugen, wobei die Verarbeitungsmittel des HSS (1) ausgelegt sind zum Einrichten eines Abonnements von Mitteilungen zum automatischen Aktualisieren der Daten der Datenbank (21) des Anwendungsservers (2) beim Ändern der Daten der Datenbank (11) des HSS (1), wobei die Verarbeitungsmittel (10) des HSS (1) auch ausgelegt sind zum Erzeugen eines neuen Abonnements beim Empfang einer Anforderung eines neuen Abonnements durch den Anwendungsserver, wenn der HSS das Abonnement nach der Modifikation nicht in der Datenbank (11) konserviert, die wenigstens Daten in Bezug auf die Autorisierung von einem Benutzerzugriff auf diverse von der IMS-Architektur unterstützte Dienste speichert, oder auch zum Modifizieren der öffentlichen Datenbank entsprechend dem Abonnement in den Daten der Datenbank (11), die wenigstens Daten mit Bezug auf die Autorisierung des Benutzerzugriffs speichert, wenn der HSS (1) das Abonnement nach der Modifikation konserviert.

12. Anwendungsserver (2) zum Autoprovisionieren von wenigstens einem Dienst in wenigstens einem Anwendungsserver von wenigstens einer IMS-Architektur, wobei die IMS-Architektur Folgendes umfasst: wenigstens einen Benutzerauthentifizierungsserver (1), HSS genannt, der Verarbeitungsmittel (10) umfasst, die auf wenigstens eine Datenbank (11) zugreifen, die wenigstens Daten mit Bezug auf die Autorisierung des Benutzerzugriffs auf diverse von der IMS-Architektur unterstützte Dienste speichert, wobei diese Daten gemäß wenigstens einer IMPU genannten öffentlichen Kennung von Benutzern indexiert sind, und wenigstens einen Anwendungsserver (2), der Verarbeitungsmittel (20) umfasst, die ausgelegt sind zum Liefern von wenigstens einem Dienst zu den Benutzern und zum Zugreifen auf wenigstens eine Datenbank (21), die wenigstens Daten in Bezug auf die Benutzer speichert, die zum Zugreifen auf diesen gemäß wenigstens einer öffentlichen Kennung von Benutzern indexierten Dienst autorisiert sind, wobei der HSS (1) und der Anwendungsserver (2) über gemäß einem Standardprotokoll normalisierte Mitteilungen kommunizieren, wobei die Verarbeitungsmittel (20) des Anwendungsservers ferner ausgelegt sind zum Empfangen und Verarbeiten einer Mitteilung, die von dem HSS (1) kommt und Daten mit Bezug auf eine Modifikation einer ersten öffentlichen Kennung (IMPU1) in eine zweite öffentliche Kennung (IMPU2) enthalten, für einen in der Datenbank des HSS (1) provisionierten und in der Datenbank des Anwendungsservers (2) autoprovisionierten Benutzer, wenigstens durch Registrieren der zweiten öffentlichen Kennung (IMPU2) mit den gemäß der ersten öffentlichen Kennung (IMPU1) indexierten Daten in der Datenbank (21) der Benutzer, die zum Zugreifen auf den Dienst autorisiert sind, wobei die Verarbeitungsmittel des Anwendungsservers (2) ausgelegt sind zum Einrichten eines Abonnements von Mitteilungen zum automatischen Aktualisieren der Daten der Datenbank (21) des Anwendungsservers (2) beim Ändern von Daten der Datenbank (11) des HSS (1), wobei die Verarbeitungsmittel (20) des Anwendungsservers (2) ausgelegt sind zum Anfordern, beim HSS (1), eines neuen Mitteilungsabonnements für die zweite öffentliche Kennung (IMPU2) nach der Registrierung der Modifikation, wenn der HSS das Abonnement nach der Modifikation nicht in der Datenbank (11) speichert, die wenigstens Daten mit Bezug auf die Autorisierung eines Benutzerzugriffs auf diverse von der IMS-Architektur unterstützte Dienste speichert.

## Claims

1. Autoprovisioning system of at least one service in at least one application server of at least one IMS architecture, the IMS architecture comprising at least one user authentication server (1), referred to as HSS, including processing means (10) accessing at least one database (11) which stores at least data relating to the authorisation for access by users to various services supported by the IMS architecture these data being indexed according to at least one public identifier, referred to as IMPU, of the users, and at least one application server (2) including processing means (20) arranged to supply at least one service to the users and to access at least one database (21) storing at least data relating to the users authorised to access said service, indexed according to at least one public identifier of the users, the HSS (91) and the application server (2) communicating via notifications standardised according to a standard protocol, the processing means (10) of the HSS (1) also being arranged in order, on the one hand, to receive a request for changing a first public identifier (IMPU1) to a second public identifier (IMPU2), for a user provisioned in the HSS (1) and autoprovisioned in the application server (2), and to process this request, at least by the creation of a second public identifier (IMPU2) and in order, on the other hand, to generate a notification sent to the application server (2), including at least data representative of the modification of the public identifier, the processing means (20) of the application server also being arranged in order to process this notification, at least by recording in the database (21) users authorised to access the service, in response to this notification, the second public identifier (IMPU2) with the data which were indexed according to the first public identifier (IMPU1), the processing means (10, 20) of the HSS (1) and of the application server (2) being arranged in order to establish a subscription to notifications for automatic updating of the data of the database (21) of the application server (2) during changes of data of the database (11) of the HSS (1), the processing means (20) of the application server (2) being arranged in order to request, from the HSS (1), a new notification subscription for the second public identifier (IMPU2) following the recording of the modification when the HSS does not save the subscription in the database (11) storing at least data relating to the authorisation of access by users to various services supported by the IMS architecture, following the modification, and the processing means (10) of the HSS (1) being arranged in order to create this new subscription upon receiving this request or in order to modify the public identifier corresponding to the subscription in the data of the database (11) storing at least data relating to the authorisation of access by users when the HSS (1) saves the subscription following the modification.

2. System according to claim 1, **characterised in that** the processing means (10) of the HSS (1) are arranged in order to include the modification data at the level of at least one standard field left free in the notification according to the standard protocol, and to send this notification, then in order to send to the application server (2) a notification of deletion of the data relating to the first public identifier (IMPU1), the processing means (20) of the application server (2) being arranged in order to receive this notification according to the standard protocol, in order to record temporarily the modification data included in the notification whilst awaiting the deletion of the first identifier and in order to record the second public identifier (IMPU2) with the data which were indexed according to the first public identifier (IMPU1), by deleting the first public identifier (IMPU1), during the reception of the notification of deletion of the data to the first public identifier (IMPU1).

3. System according to claim 1, **characterised in that** the processing means (10) of the HSS (1) are arranged in order to generate a specific notification of modification of a first public identifier (IMPU1) to a second public identifier (IMPU2), and to incorporate into this specific notification the data representing the modification, and to send this specific notification to the application server (2), the processing means (20) of the application server (2) being arranged in order to record the second public identifier (IMPU2) with the data which were indexed according to the first public identifier (IMPU1), upon reception of this specific notification.

4. System according to claim 3, **characterised in that** the processing means (10) of the HSS (1), arranged in order to receive and process the request for changing of a first public identifier (IMPU1) to a second public identifier (IMPU2), are arranged in order to process this request in particular by recording the second public identifier (IMPU2) with the data which were indexed according to the first public identifier (IMPU1), in the database (11) storing at least data relating to the authorisation of access by users to various services supported by the IMS architecture.

5. System according to claim 4, **characterised in that** the processing means (10) of the HSS (1) are arranged in order to receive and to process the request for changing of a first public identifier (IMPU1) to a second public identifier (IMPU2) coming from at least one information system (3) collecting the data relating to the users of the IMS architecture and to their subscriptions to services.

6. Method of autoprovisioning of at least one service in at least one application server of at least one IMS architecture, the IMS architecture comprising at least one user authentication server (1), referred to as HSS, including processing means (10) accessing at least one database (11) which stores at least data relating to the authorisation for access by users to various services supported by the IMS architecture these data being indexed according to at least one public identifier, referred to as IMPU, of the users, and at least one application server (2) including processing means (20) arranged to supply at least one service to the users and to access at least one database (21) storing at least data relating to the users authorised to access said service, indexed according to at least one public identifier of the users, the HSS (91) and the application server (2) communicating via notifications standardised according to a standard protocol, the method comprising the following steps:
- reception (51), by the processing means (10) of the HSS (1), of a request for changing a first public identifier (IMPU1) to a second public identifier (IMPU2), for a user provisioned in the database of the HSS (1) and autoprovisioned in the database of the application server (2), then processing (52) of this request, at least by the creation of a second public identifier (IMPU2),
- creation, by the processing means (10) of the HSS (1), of a notification sent to the application server (2), and inclusion (53) in this notification of data representing the modification of the public identifier,
- reception and processing of this notification by the processing means (20) of the application server, at least by recording (54) in the database (21) of users of the service, in response to this notification, the second public identifier (IMPU2) with the data which were indexed according to the first public identifier (IMPU1),
steps of exchanging notifications between the processing means (10, 20) of the HSS (1) and of the application server (2) make it possible to establish a subscription to notifications for the automatic updating of the data of the database (21) of the application server (2) upon changes to the data of the database (11) of the HSS (1), the method including, following the modification of the public identifier, at least one of the following steps:
- request (55), by the processing means (20) of the application server (2) to the HSS (1) for a new notification subscription for the second public identifier (IMPU2) following the recording of the modification when the HSS does not save the subscription in the database (11) storing at least data relating to the authorisation of access by users to various services supported by the IMS architecture, and creation of the subscription by the processing means (10) of the HSS (1) or
- modification (56), by the processing means (10) of the HSS (1), of the public identifier corresponding to the subscription in the data of the database (21) of the users authorised to access the service or creation of a new subscription for the second public identifier, from the subscription of the first public identifier, when the HSS (1) saves the subscription in the database (11) storing at least data relating to the authorisation of access by users to various services supported by the IMS architecture.

7. Method according to claim 6, **characterised in that** the step of inclusion (53) of the data representing the modification of the public identifier in the notification includes the following steps:
insertion (531) by the processing means (10) of the HSS (1), of these data at the level of at least one standard field left free in the notification according to the standard protocol, and sending of the notification,
- reception of the notification according to the standard protocol and temporary recording (532), by the processing means (20) of the application server (2), of the modification data included in the notification, awaiting the deletion of the first identifier,
- creation and sending (533) by the processing means (10) of the HSS (1), of a notification of deletion of the data relating to the first public identifier (IMPU1) to the application server (2),
- reception by the processing means (20) of the application server (2), of the notification of deletion of the data relating to the first public identifier (IMPU1), then enabling the implementation of the step of recording (54) of the second public identifier (IMPU2) and a step of deletion of the first public identifier (IMPU1),

8. Method according to claim 6, **characterised in that** the step of inclusion (53) of the data representing the modification of the public identifier in the notification includes the following steps:
- creation (535), by the processing means (10) of the HSS (1), of a specific notification of modification of a first public identifier (IMPU1) to a second public identifier (IMPU2),
- incorporation (536), in this specific notification, of the data representing the modification, and sending of the notification,
- reception (537) of this specific notification by the processing means (20) of the application server (2), then enabling the implementation of the step of recording (54) of the second public identifier (IMPU2).

9. Method according to one of claims 6 to 8, **characterised in that** the step of processing (52) of the request for changing of a first public identifier (IMPU1) to a second public identifier (IMPU2), by the processing means (10) of the HSS (1) following the reception (51) of this request, includes a step of recording (52.1) of the second public identifier (IMPU2) with the data which were indexed according to the first public identifier (IMPU1), in the database (11) storing at least data relating to the authorisation of access by users to various services supported by the IMS architecture.

10. 5. Method according to claim 9, **characterised in that** the step of reception (51) of the request for modification by the processing means (10) of the HSS (1) is preceded by a step of sending (50) the request for changing of a first public identifier (IMPU1) to a second public identifier (IMPU2) by at least one information system (3) collecting the data relating to the users of the IMS architecture and to their subscriptions to services.

11. Server (1) for authentication of users, referred to as HSS, for the autoprovisioning of at least one service in at least one application server of at least one IMS architecture, the IMS architecture comprising at least one HSS (1), including processing means (10) accessing at least one database (11) which stores at least data relating to the authorisation for access by users to various services supported by the IMS architecture these data being indexed according to at least one public identifier, referred to as IMPU, of the users, and at least one application server (2) including processing means (20) arranged to supply at least one service to the users and to access at least one database (21) storing at least data relating to the users authorised to access said service, indexed according to at least one public identifier of the users, the HSS (91) and the application server (2) communicating via notifications standardised according to a standard protocol, the processing means (10) of the HSS (1) also being arranged in order, on the one hand, to receive a request for changing a first public identifier (IMPU1) to a second public identifier (IMPU2), for a user provisioned in the database of the HSS (1) and autoprovisioned in the database of the application server (2), of this request, at least by the creation of a second public identifier (IMPU2), and in order, on the other hand to generate a notification sent to the application server (2), including therein at least data representing the modification of the public identifier the processing means of the HSS (1) being arranged in order to establish a subscription to notifications for the automatic updating of the data of the database (21) of the application server (2) upon changes to the data of the database (11) of the HSS (1), the processing means (10) of the HSS (1) being arranged either in order to create a new subscription when the HSS does not save the subscription in the database (11) storing at least data relating to the authorisation of access by users to various services supported by the IMS architecture, following the modification or in order to modify the public identifier corresponding to the subscription in the data of the database (11) storing at least data relating to the authorisation of access by users when the HSS (1) saves the subscription following the modification.

12. Application server (2) for autoprovisioning of at least one service in at least one application server of at least one IMS architecture, the IMS architecture comprising at least one user authentication server (1), referred to as HSS, including processing means (10) accessing at least one database (11) which stores at least data relating to the authorisation for access by users to various services supported by the IMS architecture these data being indexed according to at least one public identifier, referred to as IMPU, of the users, and at least one application server (2) including processing means (20) arranged to supply at least one service to the users and to access at least one database (21) storing at least data relating to the users authorised to access said service, indexed according to at least one public identifier of the users, the HSS (1) and the application server (2) communicating via notifications standardised according to a standard protocol, the processing means (20) of the application server (1) also being arranged in order to receive and process a notification coming from the HSS (1) and containing data representing a modification of a first public identifier (IMPU1) to a second public identifier (IMPU2), for a user provisioned in the database of the HSS (1) and autoprovisioned in the database of the application server (2), at least by recording, in the database (21) of the users authorised to access the service of this request, the second public identifier (IMPU2) with the data which were indexed according to the first public identifier (IMPU1), the processing means of the application server (2) being arranged in order to establish a subscription to notifications for automatic updating of the data of the database (21) of the application server (2) during changes of data of the database (11) of the HSS (1), the processing means (20) of the application server (2) being arranged in order to request, from the HSS (1), a new notification subscription for the second public identifier (IMPU2) following the recording of the modification when the HSS does not save the subscription in the database (11) storing at least data relating to the authorisation of access by users to various services supported by the IMS architecture, following the modification.
